# EUROPEAN PATENT APPLICATION

(11) **EP 4 641 179 A1**
(43) Date of publication of application: **29.10.2025**
(21) Application number: 24888870.3
(22) Date of filing: 25.06.2024
(51) Int. Cl.: G01N 21/88, G01B 11/24, G01B 11/14, H01M 10/48

(54) **APPARATUS FOR INSPECTING BATTERY SLITTER**

(30) Priority: 09.11.2023 KR 20230154398
(71) Applicant: LG Energy Solution, Ltd., Seoul 07335 (KR)
(72) Inventor: SUNG, Jaeyoung, Daejeon 34122 (KR); MUN, Gyeong Eun, Daejeon 34122 (KR); CHA, Minsoo, Daejeon 34122 (KR)
(74) Representative: Plasseraud IP
(86) International application number: PCT/KR2024/008776
(87) International publication number: WO 2025/100670

(57) **Abstract**

An apparatus for inspecting a slitter, according to an embodiment of the present invention, inspects the assembly state of a slitter that is applied to a slitting process of a battery, and may comprise: an imaging device for capturing an image of installation shapes of an upper knife and a lower knife included in an upper-knife unit and a lower-knife unit and cutting an electrode through a rotational motion; and a control unit for deriving at least one inspection parameter from the captured image of the installation shapes of the upper knife and the lower knife, and determining the assembly state of the slitter according to the derived inspection parameter.

## Description

### Cross-Reference to Related Applications

This application is a national stage entry under 35 U.S.C. §371 of International Application No. PCT/KR2024/008776 filed on June 25, 2024, which claims priority to Korean Patent Application No.10-2023-0154398 filed on November 9, 2023, the entire contents of each of which are incorporated herein by reference.

### Technical Field

The present disclosure relates to a battery slitter inspection apparatus, and more particularly, to a battery slitter inspection apparatus for inspecting assembled state of a slitter applied to a battery slitting process.

### Background

Secondary batteries, capable of recharging and reuse, serve as energy sources for diverse applications such as small devices like smart phones, tablet PCs and vacuum cleaners, as well as medium- to large-scale energy sources such as personal mobility, electric vehicles, and energy storage systems (ESS) for smart grids. Secondary batteries are manufactured and used in the form of assemblies such as battery modules in which multiple battery cells are connected in series and parallel, or battery packs in which battery modules are connected in series and parallel, depending on the requirements of the system.

Batteries can be largely classified into cylindrical, pouch, and square shapes depending on their shape. In general, batteries may be manufactured by combining a separator and an electrolyte after manufacturing the positive and negative plates, but they can be manufactured in different shapes depending on how they are assembled and packaged.

The battery manufacturing process may generally include electrode preparation, assembly, and activation/inspection stages. The slitting process, part of the electrode preparation, involves cutting the manufactured electrodes into a standard size. Here, the assembled state of a device for cutting electrode used in the slitting process, i.e., the slitter, may affect slitting quality.

Generally, in order to check the assembled state of the cutting device, a manual method is used in which a worker visually inspects the equipment after assembly or measures slitting width of the electrode after the slitting process is performed. However, according to this manual method, the inspection results may vary depending on the worker since the inspection is performed depending on the worker's experience. In other words, according to the existing inspection method, the inspection result is inaccurate and inspection is performed in a considerably inefficient way in that corrections are made after a defect occurred in the manufacturing process.

### Summary

### Technical Problem

To obviate one or more problems of the related art, aspects of the present disclosure provide a battery slitter inspection apparatus for inspecting assembled state of a slitter applied to a battery slitting process.

### Technical Solution

In order to achieve the objective of the present disclosure, a battery slitter inspection apparatus for inspecting assembled state of a slitter applied to a battery slitting process according to aspects of the present disclosure, may include an imaging device configured to capture images of a shape in which one or more upper knives included in an upper knife unit and one or more lower knives included in a lower knife unit that cut an electrode through a rotational motion are installed; and a controller configured to derive one or more inspection parameters from the images of installed shapes of the upper knifes and the lower knifes and to determine the assembled state of the slitter according to the derived inspection parameters.

Here, the inspection parameters may be related to shapes of plurality of upper sleeves and one or more upper knives arranged between the plurality of upper sleeves, plurality of lower sleeves and one or more lower knives arranged between the plurality of lower sleeves, and the gaps therebetween.

The inspection parameters may include one or more of: a gap between the plurality of upper knives; and a gap between the plurality of lower knives.

The inspection parameters may include one or more of: a gap between a first upper knife and a first upper sleeve arranged next to the first upper knife; and a gap between a first lower knife and a first lower sleeve arranged next to the first lower knife.

The inspection parameters may include a size of overlap between a second upper knife and a second lower knife corresponding to the second upper knife.

The inspection parameters may include one or more of: difference between the outer diameter of a third lower knife and the outer diameter of a third lower sleeve arranged next to the third lower knife; and an escape gap between the lower sleeves.

The inspection parameters may include one or more of: a uppermost height difference value of upper sleeves according to the upper sleeve rotation angle; and a uppermost height difference value of lower sleeves according to the lower sleeve rotation angle.

The battery slitter inspection apparatus may further include a lighting device which is positioned on the opposite side of the imaging device with respect to the upper knife unit and lower knife unit and illuminates a surrounding area where the upper knives, the upper sleeves, the lower knives, and the lower sleeves are located.

The battery slitter inspection apparatus may further include a first moving device for moving the imaging device in a longitudinal direction of the rotation axis of the upper knife unit and lower knife unit or in a direction perpendicular to the longitudinal direction of the rotation axis.

The battery slitter inspection apparatus may further include a second moving device for moving the lighting device in synchronization with movement of the imaging device caused by the first moving means.

The battery slitter inspection apparatus may further include a joint for fixing the battery slitter inspection apparatus to an axis of a knife unit including the upper knife unit and the lower knife unit; a knife guide for guiding a position of the bottom surface of the knife unit; and an alignment cylinder for pushing the knife unit to the knife guide.

### Advantageous Effects

According to the above-described aspect of the present disclosure, it is possible to measure factors that have a significant effect on the efficiency of the slitting process by inspecting the slitter after assembling the knife unit before performing actual slitting, thereby realizing a constant slitting quality.

In addition, the assembled status of the slitter can be precisely checked with improved resolution compared to physical measurement inspection.

In addition, by using the slitter inspection apparatus according to aspects of the present disclosure, slitter assembly defects due to operator errors can be detected in advance and prevented.

### Brief Description of the Drawings

FIG. 1 is a schematic diagram of a battery manufacturing process to which the present disclosure may be applied.
FIG. 2 is a front view schematically illustrating an electrode slitting device to which the present disclosure may be applied.
FIG. 3 is a cross-sectional view schematically illustrating the structure of the upper knife and the lower knife of the electrode slitting device of FIG. 2.
FIG. 4 is a cross-sectional view for explaining the overlap size of the upper knife and the lower knife of the electrode slitting device of FIG. 3.
FIG. 5 shows the gap between the knife and the sleeve among the slitter inspection items according to aspects of the present disclosure.
FIG. 6 shows outer diameter difference and the escape gap among the slitter inspection items according to aspects of the present disclosure.
FIG. 7 shows height difference during rotation of the sleeve among the slitter inspection items according to aspects of the present disclosure.
FIG. 8 shows an outer view of the slitter inspection apparatus according to aspects of the present disclosure.
Fig. 9 is a table showing data verifying the effectiveness of the battery slitter inspection apparatus according to aspects of the present disclosure.

100: slitter inspection apparatus
110: imaging device
120: lighting device
111: first moving means
121: second moving means
130: knife guide
150: alignment cylinder
170: joint
190: controller
300: electrode slitting device
310: upper slitting roller
320: lower slitting roller
325: escape groove
330: upper knife
340: lower knife
T: size of overlap
G: gap
P: knife pitch

### Detailed Description

The present disclosure may be modified in various forms and have various aspects, and specific aspects thereof are shown by way of example in the drawings and will be described in detail below. It should be understood, however, that there is no intent to limit the present disclosure to the specific aspects, but on the contrary, the present disclosure is to cover all modifications, equivalents, and alternatives falling within the spirit and technical scope of the present disclosure. Like reference numerals refer to like elements throughout the description of the figures.

It will be understood that, although the terms such as first, second, A, B, and the like may be used herein to describe various elements, these elements should not be limited by these terms. These terms are only used to distinguish one element from another. For example, a first element could be termed a second element, and, similarly, a second element could be termed a first element, without departing from the scope of the present disclosure. As used herein, the term "and/or" includes combinations of a plurality of associated listed items or any of the plurality of associated listed items.

It will be understood that when an element is referred to as being "coupled" or "connected" to another element, it can be directly coupled or connected to the other element or an intervening element may be present. In contrast, when an element is referred to as being "directly coupled" or "directly connected" to another element, there is no intervening element present.

The terms used herein is for the purpose of describing specific aspects only and are not intended to limit the present disclosure. As used herein, the singular forms "a", "an" and "the" are intended to include the plural forms as well, unless the context clearly indicates otherwise. It will be further understood that the terms "comprises", "comprising", "includes", "including" and/or "having", when used herein, specify the presence of stated features, integers, steps, operations, constitutional elements, components and/or combinations thereof, but do not preclude the presence or addition of one or more other features, integers, steps, operations, constitutional elements, components, and/or combinations thereof.

Unless otherwise defined, all terms used herein, including technical and scientific terms, have the same meanings as commonly understood by one skilled in the art to which the present disclosure belongs. It will be further understood that terms, such as those defined in commonly used dictionaries, should be interpreted as having meanings that are consistent with their meanings in the context of the relevant art and will not be interpreted in an idealized or overly formal sense unless expressly so defined herein.

Hereinafter, exemplary aspects of the present disclosure will be described in detail with reference to the accompanying drawings.

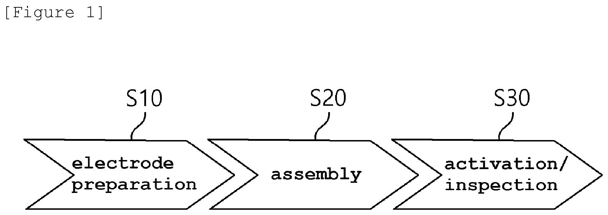

FIG. 1 is a schematic diagram of a battery manufacturing process to which the present disclosure may be applied.

The batteries may be manufactured through electrode preparation process (S10), assembly process (S20), and activation/inspection process (S30). The battery completed through these processes is shipped in the form of a battery pack (or battery module) including a plurality of battery cells connected in series. The battery pack may be connected to a load through a positive terminal and a negative terminal and perform charge/discharge operations. The battery pack may be configured to be connected in series/parallel according to the requirements of a system in which the battery is used.

More specifically, the electrode preparation process (S10) may proceed in the following order: a 'mixing process' for mixing raw materials, a 'coating process' for applying mixed slurry to a foil and drying it, a 'roll pressing process' for compressing the electrode to reduce the thickness of the electrode, a 'slitting process' for cutting the electrode to a preset width, and a 'notching process' for creating a tab on the electrode.

Here, the slitting process is a process of cutting the electrode according to the battery size after the electrode is thinly spread through the roll pressing process. It is a process of cutting the electrode vertically using a slitter according to designed battery specifications. Here, the blade may be changed depending on the size of a battery cell to be manufactured.

The assembly process (S20) is a process of assembling positive and negative plates manufactured through the electrode preparation process with a separator to make a finished cell. The manufacturing order may be different depending on the battery type (cylindrical, pouch, square), and the technology applied by each manufacturer may also be different. The assembly process (S20) may typically include detailed processes such as a stacking process in which multiple plates are stacked one after another with a separator, a tab welding process in which the current flowing from a single plate is gathered into one place, and a packaging process in which the final battery shape is formed and sealed after electrolyte injection.

In addition, the activation/inspection process (S30) is a process in which electric energy is activated and stability is confirmed. The activation process is carried out by repeating aging and charging/discharging. In the 'aging' process, the battery is stored at room temperature with a certain temperature and humidity so that the electrolyte permeates the positive and negative electrodes. When the electrolyte is dispersed inside the battery and the ion movement between the positive and negative electrodes becomes smooth, the battery is partially charged to activate the cell. Here, lithium ions move to the negative electrode and the electrolyte is decomposed, forming an 'SEI' layer, which is a thin solid film that is ion conductive, on the surface of the negative electrode. After that, the battery that has undergone the activation process is tested for charging capacity and a process of selecting defective batteries is carried out before the battery is shipped.

The present disclosure provides an apparatus that performs inspection on a slitter used in the slitting process during the electrode process.

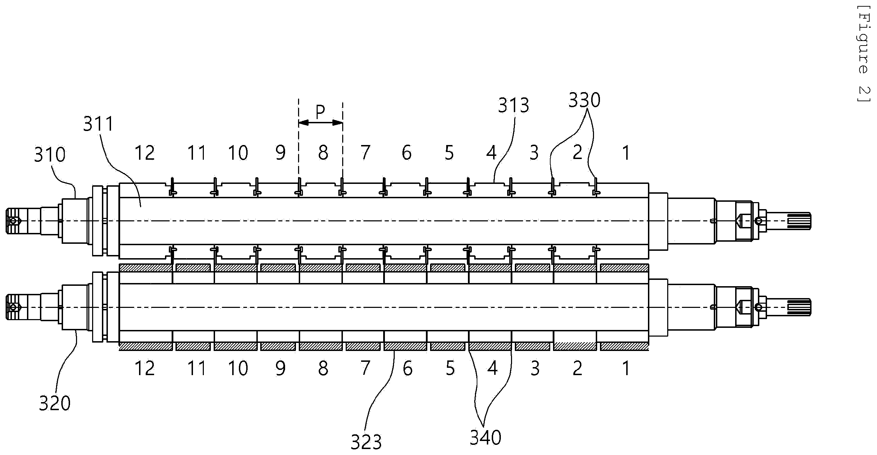

FIG. 2 is a front view schematically illustrating an electrode slitting device to which the present disclosure may be applied.

The slitting process may be performed on a jumbo roll, which is a form in which a thinly spread electrode that is discharged through a roll pressing process is wound. An electrode sheet coated with an electrode active material and dried is wound in a roll shape on the jumbo roll. Here, it is understood that the electrode sheet coated with the electrode active material and dried is a coated electrode sheet after the coating process is completed.

The electrode slitting device (300), i.e., the slitter, cuts the electrode sheet in the width direction to form a plurality of electrodes. The electrode sheet is coated with a negative electrode active material or a positive electrode active material. As the electrode sheet coated with negative electrode active material is cut by the electrode slitting device (300), a negative electrode may be manufactured. In addition, as the electrode sheet coated with positive electrode active material is cut by the electrode slitting device (300), a positive electrode may be manufactured.

The electrode slitting device (300) to which the present disclosure may be applied may be configured to include an upper unit and a lower unit, wherein the upper unit may include an upper slitting roller (310) and a plurality of upper knives (330), and wherein the lower unit may include a lower slitting roller (320) and a plurality of lower knives (340).

The upper slitting roller (310) may be arranged parallel to the width direction of an electrode sheet (30) coated with an active material. The upper slitting roller (310) may include an upper roller body (311) arranged parallel to the width direction of the electrode sheet (30) and a plurality of upper sleeves (313) fitted to the upper roller body (311). The plurality of upper sleeves (313) may be formed to have the same width and the same diameter. In the aspect illustrated in FIG. 2, the upper slitting roller (310) is configured to include twelve upper sleeves (313) and eleven upper knives (330) arranged between the upper sleeves.

The lower slitting roller (320) may be arranged parallel to the upper slitting roller (310). The lower slitting roller (320) may include a lower roller body (321) arranged parallel to the width direction of the electrode sheet (30) and a plurality of lower sleeves (323) fitted into the lower roller body (321). The plurality of lower sleeves (323) may be formed to have the same width and the same diameter. In the aspect illustrated in FIG. 2, the lower slitting roller (320) is configured to include twelve lower sleeves (323) and eleven lower knives (340) arranged between the lower sleeves.

The plurality of upper knives (330) may be arranged at equal intervals in the length direction of the upper slitting roller (310). The upper knives (330) may be fixed to both sides of the width direction of the upper sleeve (313) by fastening members. The upper knife (330) may be arranged in a ring shape along the circumference of the upper slitting roller (310) and may protrude to a certain height from the outer surface of the upper sleeve (313).

The plurality of lower knives (340) may also be arranged in the length direction of the lower slitting roller (320) and correspond to the plurality of upper knives (330), respectively. The lower knives (340) may be arranged at equal intervals. The lower knives (340) may be arranged in a ring shape along the circumference of the lower slitting roller (320) and may be formed at the same height as the outer surface of the lower sleeve (323).

Meanwhile, the interval (pitch; P) between knives may be identified in FIG. 2 and the interval between knives is typically set to 60 mm. The interval (slitting width) between knives is one of the important inspection factors in the slitter inspection according to aspects of the present disclosure.

Previously, operators relied on their experience to check the slitting width, such as visually inspecting the slitter after assembly or cutting electrode tissue.

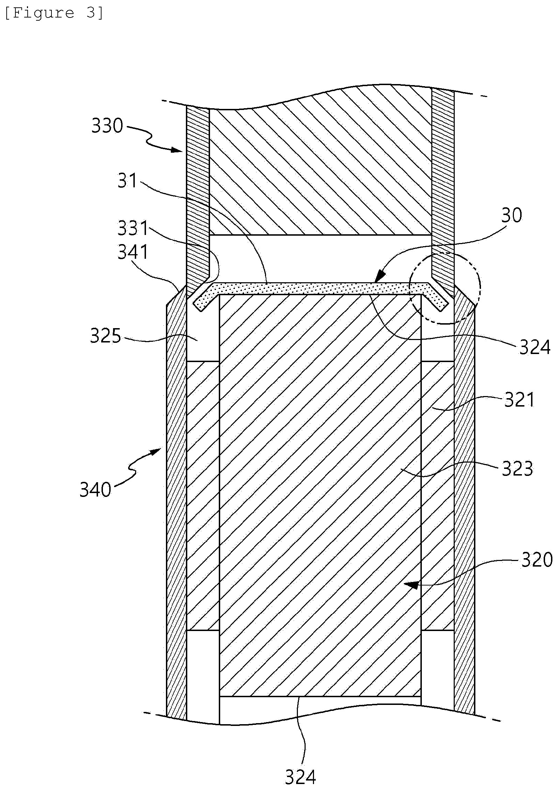

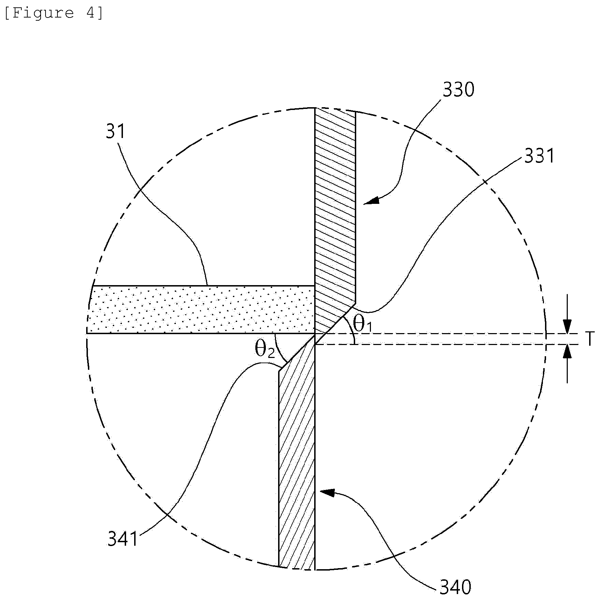

FIG. 3 is a cross-sectional view schematically illustrating the structure of the upper knife and the lower knife of the electrode slitting device of FIG. 2, and FIG. 4 is a cross-sectional view for explaining the overlap size of the upper knife and the lower knife of the electrode slitting device of FIG. 3.

The upper knife (330) and the lower knife (340) may be formed with a thickness of approximately 1 mm. An upper cutter part (331) is formed on the circumference of the upper knife (330) in a downwardly inclined shape from the inner side to the outer side of the upper knife (330). Here, the two upper cutter parts (331) fixed to each upper sleeve (313) are formed with an acute angle whose inclination angle (θ1) is spread outward. A pair of upper cutter parts (331) whose inclination angle (θ1) is spread outward are arranged in a row along the longitudinal direction of the upper slitting roller (310).

The lower cutter part (341) is formed on the circumference of the lower knife (340) in an upwardly inclined shape from the outer side to the inner side of the lower knife (340). Here, the two lower cutter parts (341) fixed to each lower sleeve (323) are formed at an acute angle with their slope angles (θ2) converging inward. A pair of lower cutter parts (341) with their slope angles (θ2) converging inward are arranged in a row along the longitudinal direction of the lower slitting roller (320).

Since the slope angle (θ1) of the upper cutter part (331) is diverged outward and the slope angle (θ2) of the lower cutter part (341) is converging inward, the sharp tips of the upper cutter part (331) and the lower cutter part (341) overlap to cut the electrode sheet (30). Here, since the upper cutter part (331) and the lower cutter part (341) are formed to be inclined at an acute angle, the shear force of the upper cutter part (331) and the lower cutter part (341) is concentrated on cutting portion of the electrode sheet (30), so that the electrode (31) can be cut smoothly.

A support surface part (324) is formed on the outer surface of the lower slitting roller (320) to support the electrode (31) between the plurality of lower knives (340). This support surface part (324) is formed on the outer surface of the lower sleeve (323) so as to be in close contact with the lower surface of the electrode sheet (30). The support surface part (324) rotates when the electrode sheet (30) is transported, thereby continuously supporting the cutting portion of the electrode sheet (30).

An escape groove (325) is formed on the outer surface of the lower slitting roller (320), so that the upper cutter part (331) is introduced into the adjacent part of the lower knife (340). This escape groove (325) may be formed to be recessed along the circumferential direction on both sides of the lower sleeve (323).

The escape groove (325) may be formed in a range spaced apart from the inner surface of the lower knife (34 0) by 0.5 mm to 1.5 mm. The escape groove (325) may be formed in a circular shape along the circumferential direction of the lower slitting roller (320) and formed at the same depth along the circumferential direction. Since the escape groove (325) is formed in a circular shape, when the lower slitting roller (320) rotates, the upper knife (330) is introduced into the escape groove (325), thereby continuously cutting the electrode sheet (30). The escape gap (G), which can be defined as the width of the escape groove, is one of the main inspection parameters of the slitting inspection apparatus according to aspects of the present disclosure.

The appropriate overlap size (T) of the upper cutter part (331) and the lower cutter part (341) may be 0.15 mm to 0.25 mm. The overlap size (T) refers to the maximum height at which the upper cutter part (331) and the lower cutter part (341) overlap each other when cutting the electrode sheet (30). If the overlap size (T) is less than the reference range, the shear force of the upper cutter part (331) and the lower cutter part (341) may decrease, thereby deteriorating the performance of cutting the electrode sheet (30). On the contrary, if the overlap size (T) exceeds the reference range, the shear force of the upper cutter part (331) and the lower cutter part (341) may excessively increase. In addition, if the overlap size (T) excessively exceeds the reference range, the wear rate of the tips of the upper cutter part (331) and the lower cutter part (341) may increase, thereby shortening the lifespan of the upper cutter and the lower cutter.

The overlap size (T) of the upper cutter part (331) and the lower cutter part (341) is one of the slitter inspection items according to the aspect of the present disclosure. Previously, the relative sizes of the overlap block and the knife outer diameter were estimated and used in the slitting process after knife assembly, but the actual overlap size was not confirmed.

In the present disclosure, the images of the upper knife end and the lower knife end are obtained using an imaging device and lighting devices, the coordinate values of the image of the upper knife end and the lower knife end are confirmed, and the overlap size of the upper knife and the lower knife may be obtained through calculation of coordinate values.

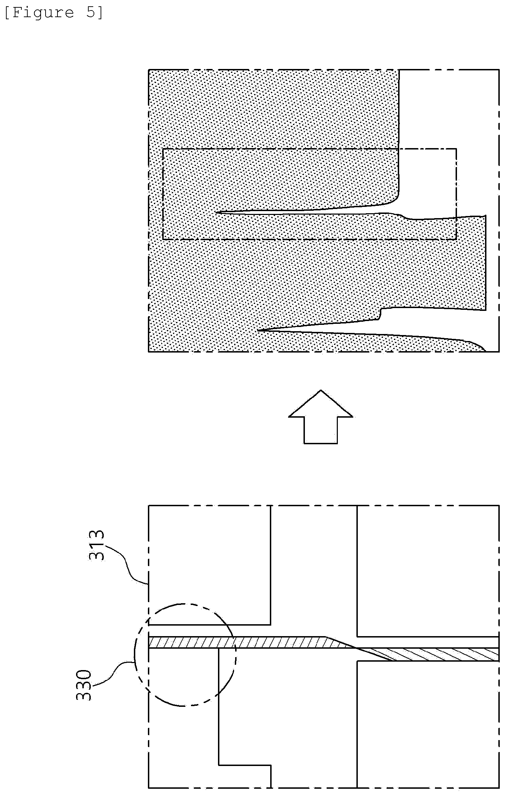

FIG. 5 shows the gap between the knife and the sleeve among the slitter inspection items according to aspects of the present disclosure.

Referring to the left drawing of FIG. 5, the concept of the gap (so-called lateral pressure gap) between the upper knife (330) and the upper sleeve (313) is shown. In the right drawing of FIG. 5, the gap between the knife and the sleeve shown in the actual image captured by the inspection apparatus according to the present disclosure is shown.

The battery slitter inspection apparatus according to an aspects of the present disclosure may determine whether the upper knife assembled state is defective by measuring the size of the area of light irradiated from a lighting device and passing between an upper knife and an upper sleeve adjacent to the upper knife and identifying the shape of the area of light.

The battery slitter inspection apparatus according to another aspect of the present disclosure may determine whether the lower knife assembled state is defective by measuring the size of the area of light irradiated from a lighting device and passing between a lower knife and a lower sleeve adjacent to the lower knife and identifying the shape of the area of light.

If the gap between the upper knife and the upper sleeve, or between the lower knife and the lower sleeve is not maintained appropriately, cutting performance may deteriorate and detachment of active material may increase, which may cause problems in battery safety.

Previously, in order to check the gap between the upper knife and the upper sleeve, or the gap between the lower knife and the lower sleeve, manual work that depended on the skill of the operator, such as checking the level of light passing through with the eyes or cutting a piece of paper, was required.

In the present disclosure, by using an imaging device and a lighting device assisting the imaging device, it is possible to determine whether the knife assembly status is defective based on the size and shape of the area of light irradiated from the lighting device and passing through the upper knife, the upper sleeve, or the lower knife and the lower sleeve. In other words, the battery slitter inspection apparatus according to aspects of the present disclosure can check the gap between the upper knife and the upper sleeve, and the lower knife and the lower sleeve through captured images and check whether the gap is appropriately maintained, thereby confirming whether the knife of the slitting device is appropriately mounted, and thus, a proper slitting process can be performed.

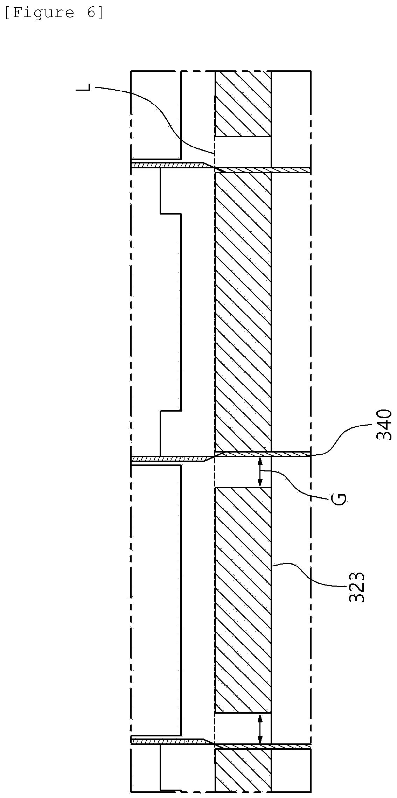

FIG. 6 shows outer diameter difference and the escape gap among the slitter inspection items according to aspects of the present disclosure.

In FIG. 6, L represents the height of the outer diameter of a lower sleeve and the outer diameter of a lower knife. The size of the outer diameter of the sleeve and the size of the outer diameter of the knife (height in FIG. 6) may be the same, but an outer diameter difference may occur between the outer diameter of the lower sleeve and the outer diameter of the lower knife.

In addition, G in FIG. 6 represents the escape gap, which is the width of the escape groove as previously discussed in FIG. 4. Since the upper cutter part (331) of the upper knife is inserted into the escape groove part (325) and cuts the electrode sheet (30) together with the lower cutter part (341) of the lower knife, the escape gap may be maintained as an appropriate size.

According to prior art, the knife was assembled and used in the slitting process based on the dimensions engraved on the upper knife unit or lower knife unit, but the actual size of the escape gap could not be identified.

In the present disclosure, it is possible to check whether an outer diameter difference has occurred and the size of the escape gap using related images captures by an imaging device and to inspect whether each part/section of a slitting device is properly installed.

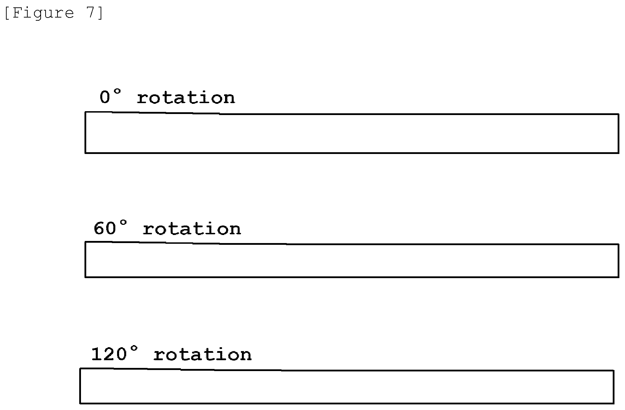

FIG. 7 shows height difference during rotation of the sleeve among the slitter inspection items according to aspects of the present disclosure.

The upper sleeve and the lower sleeve rotate for slitting, and as shown in FIG. 7, the uppermost height difference may occur as the rotation angle changes to, for example, 0°, 60°, and 120°. The uppermost height of the sleeve may not change during rotation. The slitter inspection apparatus according to aspects of the present disclosure may determine whether the sleeve is defective by recording and tracking the change in the uppermost height.

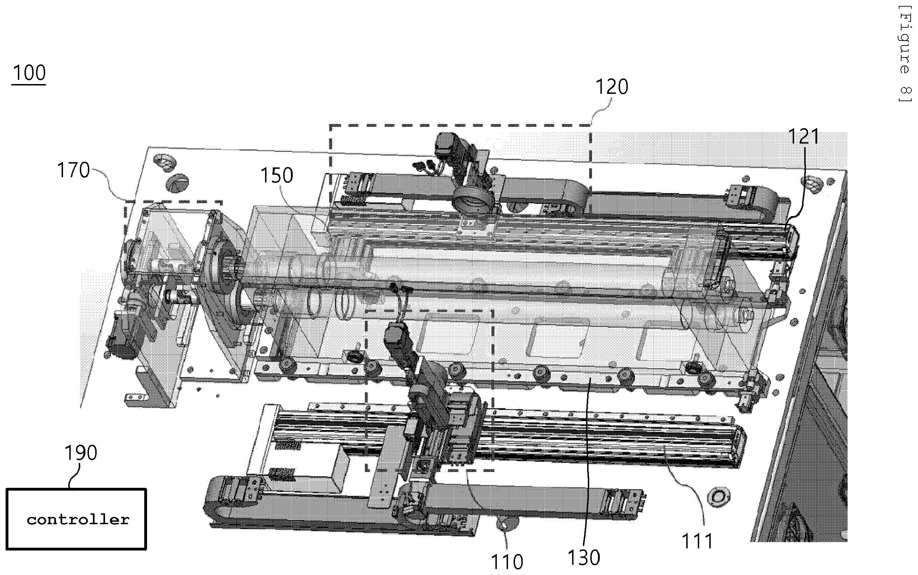

FIG. 8 shows an outer view of the slitter inspection apparatus according to aspects of the present disclosure.

The slitter inspection apparatus (100) according to aspects of the present disclosure is a device that may inspect a slitter by measuring the assembled state of a cutting device, i.e., a slitter, applied to a slitting process of batteries.

Referring to FIG. 8, the slitter inspection apparatus (100) may include an imaging device (110), a lighting device (120), a first moving means (111) supporting movement of the imaging device, a second moving means (121) supporting movement of the lighting device, and a controller (190).

The imaging device (110) may capture images in which an upper knife and a lower knife included in an upper knife unit and a lower knife unit that cut electrodes through a rotational motion are installed. The imaging device (110) may be a device such as a camera and may move in the x, y, and z axes. The imaging device (110) may be selected by considering resolution as an important factor for precise measurement. For example, the resolution of the imaging device (110) may be 3.45 um, and the measurement FOV (field of view) may be within 15 mm. Accordingly, the image area that the imaging device (110) can measure is, for example, only (12.8*9.6mm). Considering that the slitting width, i.e., the spacing between knives, is generally in a range of 40mm to 100mm, the movement of the imaging device becomes an important factor in deriving inspection parameters according to the present disclosure.

In order to support movement of the imaging device (110), a first moving means (111) may be arranged, and the first moving means (111) may be configured to include, for example, a linear motor. The first moving means (111) may move the imaging device (110) at a constant speed and distance from the first upper sleeve and the first upper knife to the twelfth upper sleeve and the eleventh upper knife. Through this, the imaging device (110) can measure the spacing between the upper knives and the spacing between the lower knives (i.e., slitting width).

In addition, the slitter inspection apparatus (100) according to aspects of the present disclosure may include a lighting device that is positioned on the opposite side of the imaging device with respect to the upper knife unit and lower knife unit and illuminates the surroundings where the upper knife, the upper sleeve, the lower knife, and the lower sleeve are positioned. The lighting device positioned on the opposite side of the camera with respect to the slitting device may cause a difference in brightness of an image captured by the camera, and one or more inspection parameters considered in the present disclosure may be derived from the captured image.

Meanwhile, a second moving means (121) that supports movement of the lighting device (120) may be positioned on the surroundings of the lighting device (120). The second moving means (121) may move the lighting device in the longitudinal direction of the rotation axis of the upper and lower knife units or in a direction perpendicular to the longitudinal direction of the rotation axis. Here, the movement of the first moving means and the movement of the second moving means may be controlled to be mutually synchronized.

In other words, the controller (190) of the slitter inspection apparatus (100) may derive one or more inspection parameters from the captured shapes of installed upper knife and lower knife and determine assembled status of the slitting device according to the derived inspection parameters. More specifically, the controller (190) may receive an image acquired by the imaging device, and check and analyze the related coordinate values of each component (upper knife, lower knife, upper sleeve, lower sleeve) shown in the image and derive one or more inspection parameters according to aspects of the present disclosure.

Here, the controller (190) may be positioned close to the imaging device (110), the lighting device (120), the first moving means (111), and the second moving means (121), but may also be positioned at a relatively long distance. The controller (190) may be connected to the imaging device (110), the lighting device (120), the first moving means (111), and the second moving means (121) through wired or wireless communication. The controller (190) may be implemented in the form of a computing device that can be accessed and controlled by an operator or user.

Here, the inspection parameters according to aspects of the present disclosure may include at least one of the following: a gap between the plurality of upper knives, a gap between a first upper knife and a first upper sleeve adjacent to the first upper knife, the size of overlap between a second upper knife and a second lower knife corresponding to the second upper knife, and the uppermost height difference value according to rotation angle of the upper sleeve.

The inspection parameters according to aspects of the present disclosure may also include at least one of the following: a gap between the plurality of lower knives, a gap between a first lower knife and a first lower sleeve adjacent to the first lower knife, the outer diameter difference between a third lower knife and a third lower sleeve adjacent to the third lower knife, escape gap of the lower sleeve, and the uppermost height difference value according to rotation angle of the lower sleeve.

Here, the gaps between the plurality of upper knives and the gaps (P) between the plurality of lower knives have been examined through FIG. 2. The gap between knives can be measured sequentially by sequentially moving the camera from the first knife to the Nth knife (N is the total number of knives included in each of the upper knife unit and lower knife unit).

In addition, the gap between knives can be measured at each angle by rotating the upper knife unit and the lower knife unit at different rotation angles (for example, 0°, 90°, 180°, 270°, etc.).

Here, the size of the gap between knives may be calculated by a controller (190) that checks and calculates the coordinate values of a first knife and a second knife that appear on the image acquired through the imaging device.

Meanwhile, the gap between the first upper knife and the first upper sleeve adjacent to the first upper knife may be referred to as a lateral pressure gap, as examined through FIG. 5.

In addition, the size (T) of the overlap between the second upper knife and the second lower knife corresponding to the second upper knife has been examined through Fig. 4. Meanwhile, the overlap size may be calculated by the controller (190) that checks and calculates the coordinate values of the upper knife end and the lower knife end that appear on the image acquired through the imaging device.

The outer diameter difference between the third lower knife and the third lower sleeve adjacent to the third lower knife and the escape gap (G) of the lower sleeves have been examined through Fig. 6 and related description. The outer diameter difference and the escape gap (G) of the lower sleeves can also be calculated by the controller (190) that analyzes the image acquired through the imaging device, checks and calculates the related coordinate values.

The difference in the uppermost height according to the rotation angle of the upper sleeve or the lower sleeve has been examined through Fig. 7 and may be considered as a parameter to be monitored for quality control of the slitting device.

Meanwhile, the knife used in the slitting device is usually made of HCr plating material, but the material has severe reflection characteristics. Therefore, one of the main factors in the slitter inspection apparatus (100) according to the present disclosure is to mount the camera and the knife in parallel.

For this, the slitter inspection apparatus (100) may include a joint (170) that aligns and fixes the inspection apparatus (100) to the upper/lower knife axes (positions where the knives are inserted) of the knife unit, a knife guide (130) that is arranged on the lower surface of the knife unit and guides position of the bottom surface of the knife unit, and an alignment cylinder (150) that pushes the knife unit to the knife guide.

Through the joint (170), the knife guide (130), and the alignment cylinder (150) of the slitter inspection apparatus (100), the knife unit, which is the inspection target, can be installed at a certain position in the slitter inspection apparatus according to aspects of the present disclosure, and the inspection apparatus can inspect the slitter with consistat accuracy.

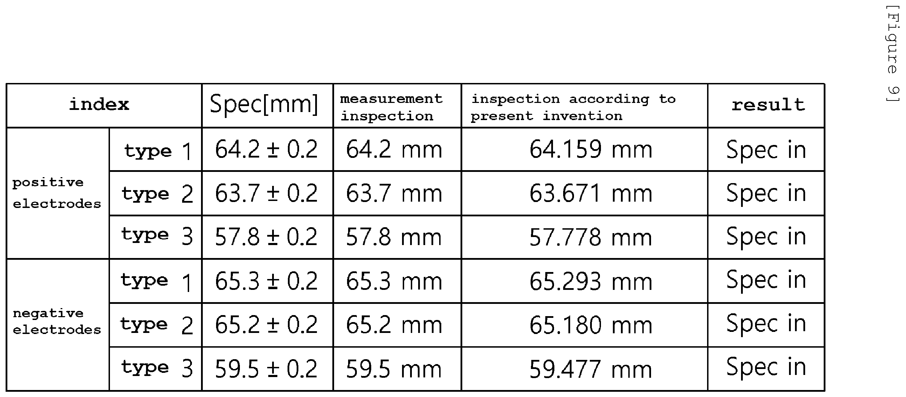

Fig. 9 is a table showing data verifying the effectiveness of the battery slitter inspection apparatus according to aspects of the present disclosure.

Fig. 9 shows results of physical measurement inspection for slitting width of three types of positive electrodes and three types of negative electrodes and results of the inspection by the slitter inspection apparatus according to aspects of the present disclosure. The physical measurement inspection is an actual inspection for the slitting width which was previously used and shows results of actually measuring width of an electrode using a steel ruler, etc. after a slitting process.

Looking at the table of Fig. 9, there is almost no difference between the values of the physical measurement inspection and the values from the image inspection according to the present disclosure. In addition, while the resolution of the physical measurement inspection is 0.5 mm, the resolution of the image inspection according to the present disclosure is 0.001 mm, which shows that the measurement precision has been improved.

In addition, according to the present disclosure, it is possible to measure the slitting width, the escape gap, the overlap, etc. by inspecting the slitter after assembling the knife unit before performing actual slitting. Accordingly, one time inspection of the knife unit can omit the physical measurement inspection of the slitting width during the period of use of the knife unit (approximately 200,000 m for the positive electrode and approximately 1 million m for the negative electrode).

The operations of the method according to the aspects of the present disclosure may be implemented as a computer-readable program or code on a computer-readable recording medium. The computer-readable recording medium includes all types of recording devices in which data readable by a computer system is stored. In addition, the computer-readable recording medium may be distributed in a network-connected computer system to store and execute computer-readable programs or codes in a distributed manner.

In the forgoing, the present disclosure has been described with reference to the exemplary aspect of the present disclosure, but those skilled in the art may appreciate that the present disclosure may be variously corrected and changed within the range without departing from the spirit and the area of the present disclosure described in the appending claims.

## Claims

1. A battery slitter inspection apparatus for inspecting a battery slitter in an assembled state, the battery splitter inspection apparatus comprising:
an imaging device configured to capture images of one or more upper knives included in an upper knife unit and one or more lower knives included in a lower knife unit configured to cut an electrode through a rotational motion; and
a controller configured to derive one or more inspection parameters from the images of the upper knifes and the lower knifes and to determine the assembled state of the slitter according to the derived inspection parameters.

2. The battery slitter inspection apparatus of claim 1, wherein the inspection parameters are related to shapes of a plurality of upper sleeves and one or more upper knives arranged between the plurality of upper sleeves, a plurality of lower sleeves and one or more lower knives arranged between the plurality of lower sleeves, and gaps therebetween.

3. The battery slitter inspection apparatus of claim **2,** wherein the inspection parameters include one or more of:
a gap between the plurality of upper knives; and
a gap between the plurality of lower knives.

4. The battery slitter inspection apparatus of claim 2, wherein the inspection parameters include one or more of:
a gap between a first upper knife and a first upper sleeve arranged next to the first upper knife; and
a gap between a first lower knife and a first lower sleeve arranged next to the first lower knife.

5. The battery slitter inspection apparatus of claim **2,** wherein the inspection parameters include a size of an overlap between a second upper knife and a second lower knife corresponding to the second upper knife.

6. The battery slitter inspection apparatus of claim 2, wherein the inspection parameters include one or more of:
a difference between an outer diameter of a third lower knife and an outer diameter of a third lower sleeve arranged next to the third lower knife; and
an escape gap between the lower sleeves.

7. The battery slitter inspection apparatus of claim **2,** wherein the inspection parameters include one or more of:
an uppermost height difference value of upper sleeves according to an upper sleeve rotation angle; and
an uppermost height difference value of lower sleeves according to a lower sleeve rotation angle.

8. The battery slitter inspection apparatus of claim **2,** further comprising a lighting device positioned on an opposite side of the imaging device with respect to the upper knife unit and lower knife unit, wherein the lighting device is configured to illuminate a surrounding area where the upper knives, the upper sleeves, the lower knives, and the lower sleeves are located.

9. The battery slitter inspection apparatus of claim 1, further comprising a first moving device configured to move the imaging device in a longitudinal direction of the rotation axis of the upper knife unit and lower knife unit or in a direction perpendicular to the longitudinal direction of the rotation axis.

10. The battery slitter inspection apparatus of claim 9, further comprising a second moving device configured to move the lighting device in synchronization with movement of the imaging device caused by the first moving means.

11. The battery slitter inspection apparatus of claim 1, further comprising:
a joint for fixing the battery slitter inspection apparatus to an axis of a knife unit including the upper knife unit and the lower knife unit;
a knife guide for guiding a position of the bottom surface of the knife unit; and
an alignment cylinder for pushing the knife unit to the knife guide.
